# EUROPÄISCHE PATENTSCHRIFT

(11) **EP 1 173 918 B1**
(45) Veröffentlichungstag und Bekanntmachung des Hinweises auf die Patenterteilung: **06.06.2007**
(21) Anmeldenummer: 00990556.3
(22) Anmeldetag: 20.12.2000
(51) Int. Cl.: H02K 11/00, H02K 23/66

(54) **ELEKTROMOTOR, INSBESONDERE ZUM HEBEN UND SENKEN VON SCHEIBEN BEI KRAFTFAHRZEUGEN**
ELECTRIC MOTOR, IN PARTICULAR FOR RAISING AND LOWERING PANES IN MOTOR VEHICLES
MOTEUR ELECTRIQUE DESTINE EN PARTICULIER A MONTER ET A DESCENDRE LES VITRES DE VEHICULES A MOTEUR

(30) Priorität: 19.02.2000 DE 10007696
(43) Veröffentlichungstag der Anmeldung: 23.01.2002
(73) Patentinhaber: ROBERT BOSCH GMBH, 70442 Stuttgart (DE)
(72) Erfinder: HAGER, Martin, 77830 Buehlertal (DE); HUCK, Thomas, 77836 Rheinmuenster (DE)
(86) Internationale Anmeldenummer: PCT/DE2000/004551
(87) Internationale Veröffentlichungsnummer: WO 2001/061828

(56) Entgegenhaltungen:
- EP-A- 0 865 148
- DE-A- 4 005 709
- DE-A- 4 233 156
- DE-A- 4 315 404
- DE-A- 19 805 185
- DE-A- 19 832 561
- US-A- 5 889 378

## Beschreibung

### Stand der Technik

Die Erfindung betrifft einen Elektromotor, insbesondere zum Heben und Senken der Scheiben eines Kraftfahrzeugs nach Gattung des unabhängigen Anspruchs. Es sind schon zahlreiche Elektromotoren zu diesem Zwecke bekannt, beispielsweise aus der EP 0 474 904 B1. Der in dieser Patentschrift gezeigte Elektromotor zeigt ein Getriebe und eine integrierte Steuerelektronik mit einer Leiterplatte, auf der die Bürsten des Elektromotors angeordnet sind. Da der Abstand zwischen Polgehäuse und Getriebegehäuse in dem der Kommutator des Elektromotors angeordnet ist sehr kurz ist, weist die Leiterplatte einen Fortsatz auf, der die Bürsten des Elektromotors zum auf der Ankerwelle sitzenden Kommutator führt. Diese Form ist aus fertigungstechnischer- so wie aus montagetechnischer Sicht umständlich und kostenaufwendig, insbesondere wenn zur Kontrolle einer Getriebestellung auch noch Hallsensoren im Bereich der Ankerwelle angeordnet sein müssen.

Die DE-A1-19805185 offenbart einen Elektromotor entsprechend dem Oberbegriff des Anspruchs 1.

### Vorteile der Erfindung

Der erfindungsgemäße Elektromotor mit den kennzeichnenden Merkmalen des Hauptanspruchs hat den Vorteil, daß er klein und flach ist und darüber hinaus mit einer einfachen, im wesentlichen rechteck-förmigen Leiterplatte auskommt.

Durch die in den Unteransprüchen aufgeführten Maßnahmen ergeben sich vorteilhafte Weiterbildungen und Verbesserungen der im Hauptanspruch angegebenen Merkmale.

Weist der Elektromotor darüber hinaus einen über das Polgehäuse hinausragenden Kommutator auf, so kann der Bürstenhalter mit einem Anschlußstecker direkt mechanisch und elektrisch über die Leiterplatte verbunden sein.

Eine Nut im Bürstenhalter, die zur Aufnahme der im wesentlichen rechteckigen Leiterplatte dient, erweist sich als weiterer Vorteil, da auf diese Weise die Leiterplatte genau positioniert werden kann. Durch diese Toleranzarmut können die Anschlüsse für den Stecker und für die Bürsten direkt zur Leiterplatte geführt werden.

Weiterhin ist vorteilhaft, wenn Entstörbauelemente, die typischerweise nahe den Bürsten angeordnet sein sollen, direkt auf die Leiterplatte aufgebracht werden können.

Wird die Leiterplatte mit einem ASIC mit einem integrierten Hallsensor bestückt, so können vorteilhafterweise ein Teil der Bauelemente und damit auch Kosten eingespart werden

Als besonders vorteilhaft erweist es sich, wenn sich die Leiterplatte mindestens über die Länge des Kommutators erstreckt, insbesondere diesen zwei- oder mehrfach überragt. So ist ausreichend Raum zur Unterbringung der elektronischen Bauelemente der Steuerelektronik, insbesondere in Abhängigkeit zur benötigten Leistung.

Trägt der Bürstenhalter ein sich entlang einer Ankerwelle erstreckendes Segment, welches am Ende zumindest als ein Teil einer Lageraufnahme ausgebildet ist, so wird die Ankerwelle stabil im Kommutatorbereich festgehalten und insbesondere der Abstand zwischen einem auf der Ankerwelle angeordneten Gebermagneten und einem auf der Leiterplatte angeordneten Hallsensor konstant gehalten.

Durch Halteglieder für Entstörbauelemente können diese im Bereich der Bürsten erschütterungsarm angebracht werden, was vorteilhafterweise die Lebensdauer der Entstörbauelemente erhöht.

Besonders vorteilhaft sind bogen- oder brückenförmige Verbindungsbrücken zwischen Leiterplatte und Stecker. Auf diese Weise sind die Verbindungsbrücken unempfindlich gegenüber Zug und Druck die bei den Erschütterungen des Fahrzeugs als Folge der Massenträgheit auftreten. Dadurch ist eine gute Kontaktierung des Steckers gewährleistet.

Als ein weiterer Vorteil ist es anzusehen, wenn im Bereich des Bürstenfeuers, zwischen Bürsten und Kommutator keine Leiterbahnen auf der Leiterplatte angeordnet sind. Diese würden durch sprühende Funken oder ähnliches leicht beschädigt, insbesondere korrodiert werden.

Ist die Leiterplatte außer an der Nut noch an mindestens einem weiteren Punkt befestigt, ergibt sich eine besonders stabile Verbindung zwischen Leiterplatte und Bürstenhalter.

Sind die Entstörbauelemente in Haltegliedern am Bürstenträger befestigt, so ist es besonders vorteilhaft, die Leiterplatte mittels den befestigten Entstörbauelementen zu fixieren. Auf diese Weise ergibt sich eine leichte und schnelle Montage der Leiterplatte.

Von besonderem Vorteil ist es, wenn die Leiterplatte an Segmenten die auch eine Lageraufnahme für die Ankerwelle aufweisen, gehalten sind. So wird der Abstand zwischen einem auf der Ankerwelle angeordneten Gebermagneten und einem auf der Leiterplatte angeordneten Hallsensor auch bei starken Erschütterungen konstant gehalten.

Ein wesentlicher Vorteil ist auch dadurch zu erzielen, daß die Leiterplatte, insbesondere als Steckmodul, in das Getriebegehäuse eingeschoben werden kann. Dadurch kann die Steuerelektronik leicht gewechselt werden.

Ist der Anschlußstecker mit der Leiterplatte mechanisch und elektrisch verbunden, so kann ein Steckmodul mit integriertem Anschlußstecker verwendet werden, wodurch die Kontaktierung des Anschlußsteckers wesentlich vereinfacht wird. Dies gilt insbesondere dann, wenn die Kontaktierung der Bürsten über Klemmelektroden vorgesehen ist.

Vorteilhaft ist es auch den Stecker beziehungsweise das Steckmodul mittels einer Flanschverbindung am Getriebegehäuse zu befestigen. So ist ein sicherer Halt des Steckmoduls gewährleistet und die Verbindung über entsprechende Dichtungen auch wasserdicht leicht herzustellen.

### Zeichnungen

Ausführungsbeispiele der Erfindung sind in den Zeichnungen dargestellt und in der nachfolgenden Beschreibung näher erläutert. Es zeigen
Figur 1a einen Teilschnitt durch einen erfindungsgemäßen Elektromotor nach Linie a-a in Figur 1b in schematischer Darstellung,
Figur 1b einen Schnitt nach Linie b-b in Figur 1a in schematischer Darstellung
Figur 2 eine Steckerbürstenhalterkombination mit Platine in perspektivischer Darstellung und
Figur 3 einen Elektromotor mit Bürstenhaltersteckerkombination und Platine
Figur 4 einen kompletten Motor mit Getriebe in perspektivischer Darstellung,
Figur 5 eine weitere Ausführungsform eines Bürstenhalters in perspektivischer Darstellung,
Figur 6a einen Schnitt durch einen Ausschnitt des Stegs mit Leiterplatte in schematischer Darstellung,
Figur 6b einen Schnitt durch einen Ausschnitt des Stegs mit Leiterplatte in einer Variation zu Figur 6a,
Figur 7a einen kompletten Elektromotor in einer Variation mit Wechselschacht in perspektivischer Darstellung und
Figur 7b eine Leiterplatte mit Steuerelektronik und Stecker in perspektivischer Darstellung.

### Beschreibung des Ausführungsbeispiels

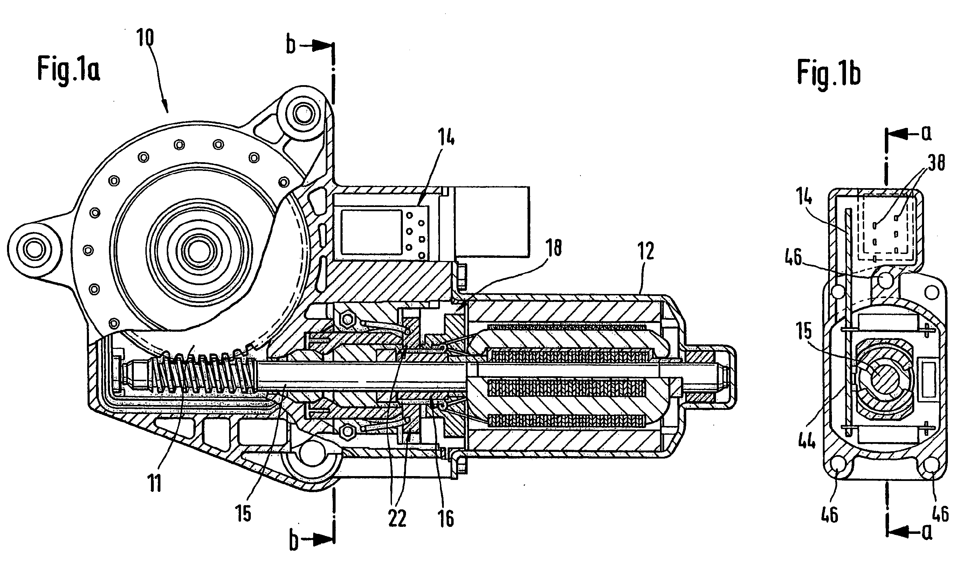

In Figuren 1a und 1b ist ein Elektromotor dargestellt, bei dem zwischen einem Getriebegehäuse 10 mit einem Getriebe 11 und einem Polgehäuse 12 eine im wesentlichen rechteckige Leiterplatte 14 angeordnet ist. Dazu wurde das Polgehäuse 12 soweit verkürzt, daß ein auf einer Ankerwelle 15 sitzender Kommutator 16 über das Polgehäuse 12 hinausragt. Ein Bürstenhalter 18, der vom Polgehäuse 12 und Getriebegehäuse 10 gehalten wird, trägt Bürsten 22, die mit dem Kommutator 16 in Eingriff stehen.

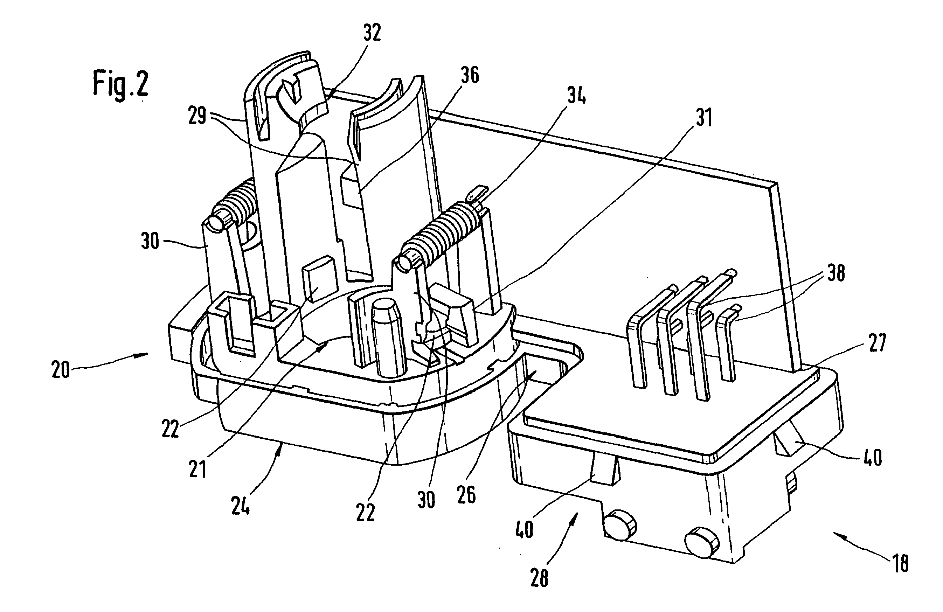

In Figur 2 ist der Bürstenhalter 18 mit der Leiterplatte 14 im Detail dargestellt. Der Bürstenhalter 18 weist im wesentlichen drei Bereiche auf. Einen, vom Polgehäuse 12 und vom Getriebegehäuse 10 gehaltenen, im wesentlichen runden Kunststoffring 20, welcher auf zwei gegenüberliegenden Seiten abgeflacht ist, einen parallel zu den abgeflachten Seiten heraus geführten Steg 26, und einen Anschlußstecker 28 der vom Steg 26 getragen wird. Die innere Aussparung des Kunststoffrings 20 ist im folgenden mit der Bezugsziffer 21 versehen.

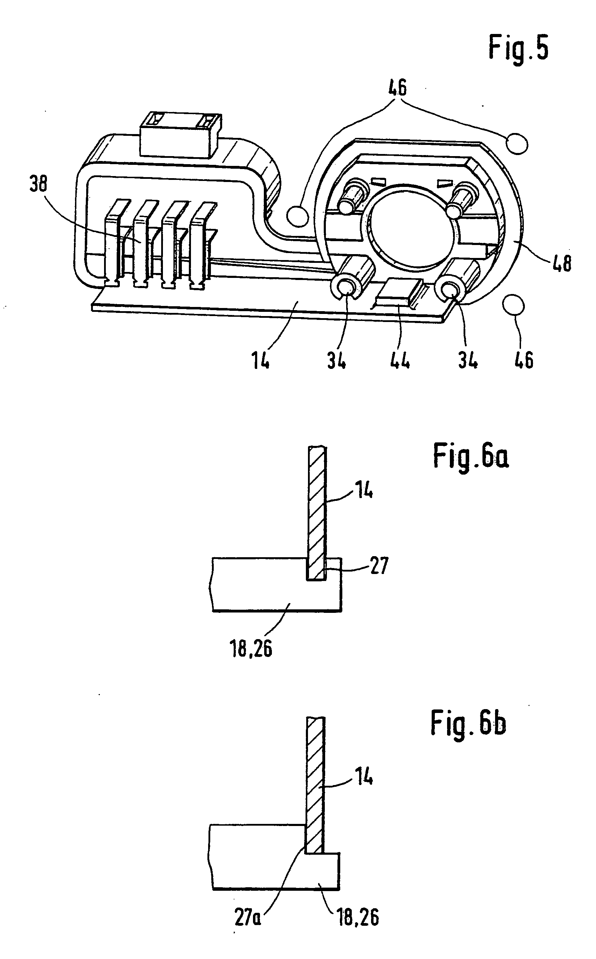

Die Steckrichtung des Anschlußsteckers 28 ist dabei senkrecht zum Steg 26 und parallel zur Achse der Ankerwelle 15. Die in den Bürstenhalter 18 eingesteckte Leiterplatte 14 erstreckt sich dabei vom Kunststoffring 20 über den Steg 26 bis zum Anschlußstecker 28 des Bürstenhalters 18. Dazu weisen alle drei Bereiche, der Kunststoffring 20, der Steg 26 und der Anschlußstecker 28 eine durchgängige Nut 27 auf (Figur 6), in welche die Leiterplatte 14 taschenartig eingesteckt ist. Die Leiterplatte 14 sitzt so fest im Bürstenhalter 18 und erstreckt sich in einer Ebene parallel zur Ankerwelle 15 zwischen Getriebe 11 und Polgehäuse 12.

Durch die innere Aussparung 21 des Kunststoffrings 20 ragt im montiertem Zustand die Ankerwelle 15, die den Kommutator 16 trägt. Am Rande der inneren Aussparung 21 des Kunststoffrings 20 sitzen zwei gegenüberliegende Segmente 29 eines hohen Zylinderrings, koaxial zum Kunststoffring 20. An deren Fuße sind Bürstenträger 31 angeordnet. Am anderen Ende der Segmente 29, also an dem vom Kunststoffring 20 weg weisenden Ende, bilden diese eine Lageraufnahme 32 für ein Kalottenlager welches die Ankerwelle 15 stützt.

Am Fuße der Segmente 29 sind an den Bürstenträgern 31 die Bürsten 22 derart angeordnet, daß sie aus Aussparungen in den Segmenten 29 in Richtung des Kommutators 16 herausragen, insbesondere mittels nicht dargestellter Federn an den Kommutator 16 angedrückt werden. In unmittelbarer Umgebung der Bürsten 22 sind auch die Entstörglieder 34 angeordnet. Diese liegen auf am Bürstenhalter 18 angeordneten Haltegliedern 30 auf, erstrecken sich parallel zum Bürstenhalter 18 und sind direkt mit der Leiterplatte 14 kontaktiert.

Die Leiterplatte 14 kann dadurch, daß die Bürstenträger 31 im Bereich der Segmente 29 angeordnet sind, sehr nah an die Ankerwelle 17 herangeführt werden. Die Entstörbauelemente 34 sind direkt auf der Leiterplatte 14 angeordnet. Wie in der Zeichnung dargestellt, können insbesondere die Spulen oder Kondensatoren, die als Entstörglieder 34 fungieren, senkrecht aus der Ebene der Leiterplatte 14 hinausragen. Die Leiterplatte 14 kann so in einem Prozeß mit Bauelementen der Steuerelektronik und Entstörbauelemente 34 bestückt werden, wodurch ein nachträgliches Einlöten der Entstörbauelemente 34 entfällt.

Auf der Ankerwelle 15 ist zusätzlich noch ein Magnetgeber 35 zwischen dem Kommutator 16 und der Lagerkalotte 37 angeordnet, der zusammen mit einem auf der Leiterplatte 14 angeordneten Hallsensor 36 eine Positionsbestimmung des Getriebes 11 erlaubt. Der Magnetgeber 35 besteht aus einem auf die Ankerwelle 15 beispielsweise aufgepreßten Hohlzylinder der in mehreren Segmenten jeweils gepaart unterschiedliche Polung aufweist. Als Hallsensor 36 dient ein auf der Leiterplatte 14 angeordneter ASIC der einen integrierten Hallsensor aufweist. Möglich sind natürlich auch Einzel- oder Doppelhallsensoren.

Da sich die Leiterplatte 14 von den Segmenten 29 bis zum Anschlußstecker 28 erstreckt, sind die Verbindungsbrücken 38 des Anschlußsteckers 28, die auch direkt Steckerpins des Anschlußsteckers 28 bilden können, direkt oder durch eine einfache rechtwinklige Biegung mit der Leiterplatte 14 verbunden. So ist eine kabellose Verbindung von Anschlußstecker 28 und Leiterplatte 14 möglich. Die Verbindungsbrücken 38 können dabei beispielsweise über einen Lötprozeß oder über Einpreßtechniken mit der Leiterplatte 14 verbunden werden.

Die Außenflächen des Bürstenhalters 18 weisen außerdem noch diverse Befestigungselemente wie Zähne 40 zur einfachen Befestigung des Getriebegehäuses 10 auf. Zwischen Polgehäuse 12, Getriebegehäuse 10 und Bürstenhalter 18 können Dichtungen 48 angeordnet sein, die beispielsweise durch einen mehrkomponenten Spritzprozess angespritzt sind oder aber auch als separates Dichtungsteil ausgebildet sind.

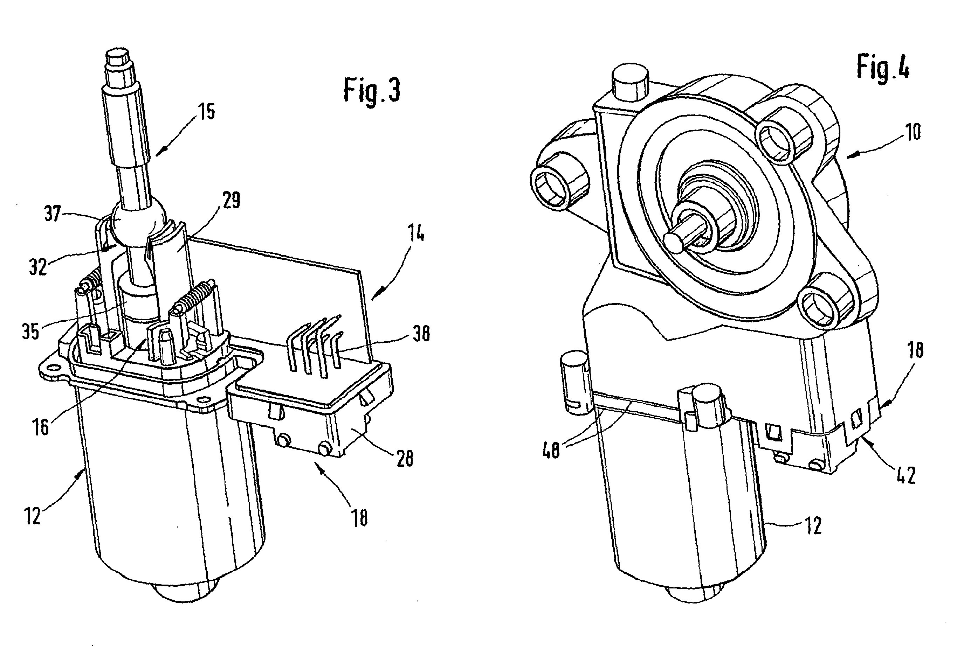

Figur 3 zeigt einen Elektromotor mit Bürstenhalter 18 und Polgehäuse 12. An der Ankerwelle 15 ist die Lagerkalotte 37 in der Lageraufnahme 32 am oberen Ende der Segmente 29 angeordnet. Zwischen Kommutator 16 und Lageraufnahme 32 ist der Magnetgeber 35 positioniert. Die Ankerwelle 15 selbst ist an ihrem ankerfernen Ende anschlagend fliegend gelagert und ankerseitig mit einem Gleit- oder Wälzlager versehen.

Figur 4 zeigt einen Elektromotor mit Bürstenhalter 18, Polgehäuse 12 und Getriebegehäuse 10. Polgehäuse 12 und Getriebegehäuse 10 sind dabei mit drei Befestigungselementen an drei Verbindungspunkten 46 verbunden. Darüber hinaus weist das Getriebegehäuse 10 Clips 42 zur Verbindung mit den Zähnen 40 des Bürstenhalters 18 auf.

Figur 5 zeigt eine Variation des Bürstenhalters 18 mit den Verbindungsbrücken 38, und den Positionen der Verbindungspunkte 46 des Polgehäuses 12 mit dem Getriebegehäuse 10. Diese sind in Form eines etwa gleichschenkligen Dreiecks angeordnet. Auf der der Ankerwelle 15 zugewandten Seite der Leiterplatte 14 ist ein ASIC 44 mit integriertem Hallsensor angeordnet. Die Entstörbauelemente 34 sind hier in einer zylinderartigen Ausformung des Bürstenhalters 18 parallel zur Ankerwelle 15 angeordnet.

In Figur 6a ist ein Ausschnitt aus einem Schnitt durch den Steg 26 dargestellt. Der Steg 26 des Bürstenhalters 18 weist eine Nut 27 auf, in die die Leiterplatte 14 eingesteckt ist. In Figur 6b ist eine Variation dazu gezeigt, bei der der Steg 26 anstatt der Nut 27, ein Anschlag 27a zur Arretierung der Leiterplatte 14 aufweist.

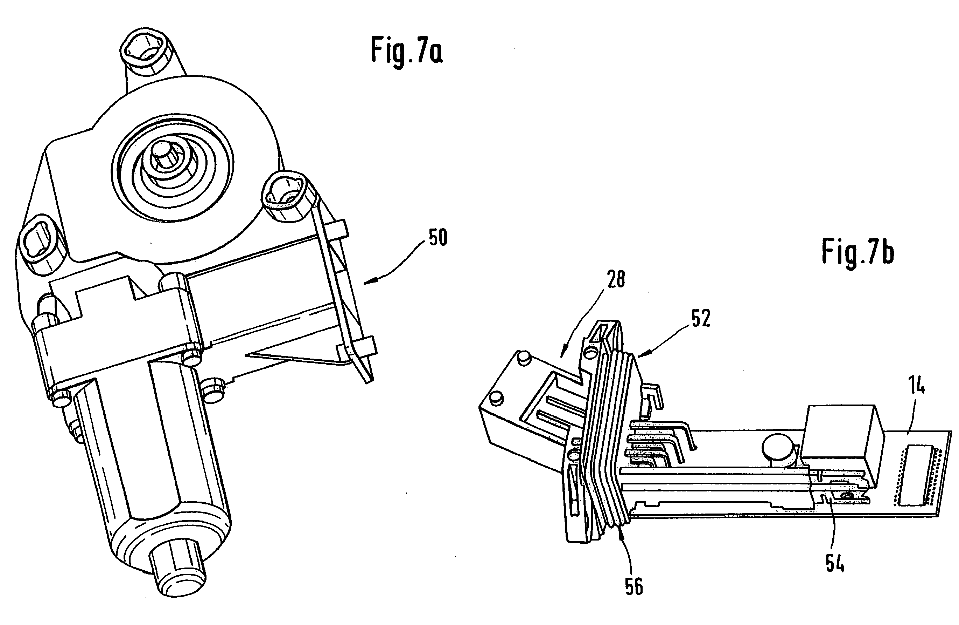

In Figur 7a ist eine Variation eines erfindungsgemäßen Elektromotors dargestellt. Der Bürstenhalter 18 ist hier nicht zu sehen und weist keinen Steg 26 mit Anschlußstecker 28 auf. Statt dessen weist das Getriebegehäuse 10 eine seitliche Öffnung 50 auf, in die eine rechteckige Leiterplatte 14 mit der Steuerelektronik eingeschoben werden kann.

Wie in Figur 7b dargestellt ist der Anschlußstecker 28 an einer Seite über einen Verbindungsflansch 52 an die Leiterplatte 14 angefügt. Zur Verbindung mit den Bürsten 22 (Figur 2) oder den Entstörbauelementen 34 weist die Leiterplatte 14 hier Klemmelektroden 54 auf die beim Einschieben der Leiterplatte 14 in die Öffnung 50 (Figur 7a) mit entsprechenden Gegenkontakten - beispielsweise am Bürstenhalter 18 - in Eingriff gebracht werden. Beim Einschieben der Leiterplatte 14 kann diese beispielsweise mittels einer hier nicht gezeigten Nut und/oder entsprechende Anschläge im Getriebegehäuse 10 in die korrekte Position geschoben werden, beziehungsweise in der vorgesehenen Position fixiert werden.

In montiertem Zustand verschließt der Verbindungsflansch 52 das Getriebegehäuse über entsprechende Flanschdichtungen 56. Die Flanschverbindung kann beispielsweise als Schraub- oder Clipsverbindung ausgeführt sein.

## Patentansprüche

1. Elektromotor, insbesondere zum Heben und Senken der Scheiben eines Kraftfahrzeugs, mit einem Getriebe (11), einem eine Ankerwelle (15) aufnehmendes Getriebegehäuse (10), einem Bürstenhalter (18) und einer im Getriebegehäuse (10) angeordneten Steuerelektronik, und die Steuerelektronik eine im Getriebegehäuse 10 angeordnete Leiterplatte (14) aufweist, die sich über die axiale Länge des Kommutators (16) erstreckt und die axiale Länge des Kommutators (16) mindestens um das 1,5-fache überragt, **dadurch gekennzeichnet, dass** der Bürstenhalter (18) von dem Getriebegehäuse (10) und einem Polgehäuse (12) gehalten wird und einen Kunststoffring (20) aufweist, durch den die Ankerwelle (15) mit dem darauf angeordneten Kommutator (16) ragt.

2. Elektromotor nach Anspruch 1, **dadurch gekennzeichnet, daß** der Elektromotor ein Polgehäuse (12) und einen Kommutator (16) aufweist und der Kommutator (16) über das Polgehäuse (12) hinausragt.

3. Elektromotor nach einem der vorhergehenden Ansprüche, **dadurch gekennzeichnet, daß** ein Bürstenhalter (18) vorgesehen ist, der zur Aufnahme der Leiterplatte (14) eine Nut (27) oder einen Anschlag (27a) aufweist.

4. Elektromotor nach einem der vorhergehenden Ansprüche, **dadurch gekennzeichnet, daß** Entstörbauelemente (34) vorgesehen sind, die direkt auf die Leiterplatte (14) aufgebracht sind.

5. Elektromotor nach einem der vorhergehenden Ansprüche, **dadurch gekennzeichnet, daß** die Leiterplatte (14) mit mindestens einem ASIC (44) mit integrierten Hallsensoren bestückbar ist.

6. Elektromotor nach Anspruch 3, **dadurch gekennzeichnet, daß** der Bürstenhalter als Steckerpins verwendbare Verbindungsbrücken (38) aufweist.

7. Elektromotor nach einem der vorhergehenden Ansprüche, **dadurch gekennzeichnet, daß** ein Polgehäuse (12) vorgesehen ist, das mit dem Getriebegehäuse (10) mittels drei Schrauben verbunden ist.

8. Elektromotor nach einem der vorhergehenden Ansprüche, **dadurch gekennzeichnet, dass** der Bürstenhalter (14) mindestens ein sich entlang einer Ankerwelle (15) erstreckendes Segment (29) trägt, das sich über die Leiterplatte (14) hinaus erstreckt und an dessen Ende zumindest ein Teil einer Lageraufnahme (32) ausgebildet ist.

9. Elektromotor nach einem der vorhergehenden Ansprüche, **dadurch gekennzeichnet, dass** der Bürstenhalter (18) Halteglieder (30)für Entstörbauelemente (34) aufweist.

10. Elektromotor nach einem der vorhergehenden Ansprüche, **dadurch gekennzeichnet, dass** der Bürstenhalter (18) einen Anschlußstecker (28) aufweist, der mittels bogenförmigen oder brückenförmigen Verbindungsbrücken (38) mit der Leiterplatte (14) verbunden ist.

11. Elektromotor nach einem der vorhergehenden Ansprüche, **dadurch gekennzeichnet, dass** die Leiterplatte (14) im Bereich des Bürstenfeuers am Kommutator (16),insbesondere auf der dem Kommutator (16) zugewandten Seite, keine Leiterbahnen aufweist.

12. Elektromotor nach einem der vorhergehenden Ansprüche, **dadurch gekennzeichnet, dass** mindestens eine weitere Befestigungseinrichtung außer der Nut (27) am Bürstenhalter (18) vorgesehen ist.

13. Elektromotor nach Anspruch 12, **dadurch gekennzeichnet, dass** die mindestens eine weitere Befestigung der Leiterplatte (14) mittels der Entstörbauelemente (34) vorgenommen ist.

14. Elektromotor nach Anspruch 12, **dadurch gekennzeichnet, dass** die Leiterplatte (14) am Segment (29) befestigt ist.

15. Elektromotor nach einem der vorhergehenden Ansprüche, **dadurch gekennzeichnet, daß** die im wesentlichen rechteckige Leiterplatte (14) in eine Öffnung (50) des Getriebegehäuses (10) einschiebbar ist.

16. Elektromotor nach einem der vorhergehenden Ansprüche, **dadurch gekennzeichnet, daß** die Leiterplatte (14) mit dem Anschlußstecker (28) verbunden ist.

17. Elektromotor nach Anspruch 16, **dadurch gekennzeichnet, daß** eine Flanschverbindung (52) zur Verbindung des Anschlußsteckers (28) mit dem Getriebegehäuse (10) vorgesehen ist.

## Claims

1. Electric motor, in particular for raising and lowering motor vehicle window panes, having a gearbox (11), having a gearbox housing (10) which holds an armature shaft (15), having a brushholder (18) and having control electronics which are arranged in the gearbox housing (10), and have a printed circuit board (14) which is arranged in the gearbox housing (10), extends over the axial length of the commutator (16) and overhangs the axial length of the commutator (16) by at least 1.5 times, **characterized in that** the brushholder (18) is held by the gearbox housing (10) and a pole housing (12) and has a plastic ring (20) through which the armature shaft (15) projects, with the commutator (16) arranged on it.

2. Electric motor according to Claim 1, **characterized in that** the electric motor has a pole housing (12) and a commutator (16), and the commutator (16) projects beyond the pole housing (12).

3. Electric motor according to one of the preceding claims, **characterized in that** a brushholder (18) is provided which has a groove (27) or a stop (27a) in order to hold the printed circuit board (14).

4. Electric motor according to one of the preceding claims, **characterized in that** suppression components (34) are provided, and are fitted directly to the printed circuit board (14).

5. Electric motor according to one of the preceding claims, **characterized in that** the printed circuit board (14) can be fitted with at least one ASIC (44) with integrated Hall sensors.

6. Electric motor according to Claim 3, **characterized in that** the brushholder has connecting means (38) which can be used as plug pins.

7. Electric motor according to one of the preceding claims, **characterized in that** a pole housing (12) is provided and is connected to the gearbox housing (10) by means of three screws.

8. Electric motor according to one of the preceding claims, **characterized in that** the brushholder (14) is fitted with at least one segment (29) which extends along an armature shaft (15), extends beyond the printed circuit board (14), and at least a part of a bearing holder (32) is formed at its end.

9. Electric motor according to one of the preceding claims, **characterized in that** the brushholder (18) has holding elements (30) for suppression components (34).

10. Electric motor according to one of the preceding claims, **characterized in that** the brushholder (18) has a connecting plug (28) which is connected to the printed circuit board (14) by means of connecting means (38) which are curved or in the form of links.

11. Electric motor according to one of the preceding claims, **characterized in that** the printed circuit board (14) has no conductor tracks in the area of the brush sparking on the commutator (16), in particular on the side facing the commutator (16).

12. Electric motor according to one of the preceding claims, **characterized in that** at least one further attachment device, apart from the groove (27), is provided on the brushholder (18).

13. Electric motor according to Claim 12, **characterized in that** the at least one further attachment for the printed circuit board (14) is provided by means of the suppression components (34).

14. Electric motor according to Claim 12, **characterized in that** the printed circuit board (14) is attached to the segment (29).

15. Electric motor according to one of the preceding claims, **characterized in that** the essentially rectangular printed circuit board (14) can be inserted into an opening (50) in the gearbox housing (10).

16. Electric motor according to one of the preceding claims, **characterized in that** the printed circuit board (14) is connected to the connecting plug (28).

17. Electric motor according to Claim 16, **characterized in that** a flange connection (52) is provided for connection of the connecting plug (28) to the gearbox housing (10).

## Revendications

1. Moteur électrique, en particulier pour lever et baisser les vitres d'un véhicule automobile, comprenant un engrenage (11), un boîtier d'engrenage (10) logeant un arbre d'induit (15), un porte-balais (18) et une électronique de commande disposée dans le boîtier d'engrenage (10), l'électronique de commande présentant une plaquette de circuits imprimés (14) qui s'étend dans le boîtier d'engrenage (10) sur la longueur axiale du commutateur (16) et dépasse au moins 1,5 fois de la longueur axiale du commutateur (16),
**caractérisé en ce que**
le porte-balais (18) est maintenu par le boîtier d'engrenage (10) et par une carcasse stator (12) et présente une bague en matière plastique (20) traversée par l'arbre d'induit (15) muni du commutateur (16).

2. Moteur électrique selon la revendication 1,
**caractérisé en ce que**
le moteur électrique présente une carcasse stator (12) et un commutateur (16), et le commutateur (16) fait saillie au-dessus de la carcasse stator (12).

3. Moteur électrique selon l'une quelconque des revendications précédentes,
**caractérisé en ce qu'**
on prévoit un porte-balais (18) qui présente une rainure (27) ou une butée (27a) pour loger la plaquette de circuits imprimés (14).

4. Moteur électrique selon l'une quelconque des revendications précédentes,
**caractérisé en ce que**
des composants d'antiparasitage (34) sont montés directement sur la plaquette de circuits imprimés (14).

5. Moteur électrique selon l'une quelconque des revendications précédentes,
**caractérisé en ce que**
la plaquette de circuits imprimés (14) peut être équipée d'au moins un ASIC (44) muni de capteurs Hall intégrés.

6. Moteur électrique selon la revendication 3,
**caractérisé en ce que**
le porte-balais présente des ponts de liaison (38) utilisables comme broches de connexion.

7. Moteur électrique selon l'une quelconque des revendications précédentes,
**caractérisé en ce qu'**
une carcasse stator (12) est reliée au boîtier d'engrenage (10) au moyen de trois vis.

8. Moteur électrique selon l'une quelconque des revendications précédentes,
**caractérisé en ce que**
le porte-balais (14) porte au moins un segment (29) qui s'étend le long d'un arbre d'induit (15), dépasse de la plaquette de circuits imprimés (14) et dont l'extrémité présente au moins une partie d'un logement de palier (32).

9. Moteur électrique selon l'une quelconque des revendications précédentes,
**caractérisé en ce que**
le porte-balais (18) présente des éléments de retenue (30) pour des composants d'antiparasitage (34).

10. Moteur électrique selon l'une quelconque des revendications précédentes,
**caractérisé en ce que**
le porte-balais (18) présente un connecteur (28) relié à la plaquette de circuits imprimés (14) au moyen de ponts de liaison (38) en forme d'arc ou de pont.

11. Moteur électrique selon l'une quelconque des revendications précédentes,
**caractérisé en ce que**
la plaquette de circuits imprimés (14) ne présente pas de pistes conductrices dans la zone des étincelles aux balais sur le commutateur (16), en particulier sur le côté tourné vers le commutateur (16).

12. Moteur électrique selon l'une quelconque des revendications précédentes,
**caractérisé en ce qu'**
on prévoit, outre la rainure (27), au moins un autre dispositif de fixation sur le porte-balais (18).

13. Moteur électrique selon la revendication 12,
**caractérisé en ce qu'**
au moins un autre dispositif de fixation de la plaquette de circuits imprimés (14) est réalisé au moyen des composants d'antiparasitage (34).

14. Moteur électrique selon la revendication 12,
**caractérisé en ce que**
la plaquette de circuits imprimés (14) est fixée au segment (29).

15. Moteur électrique selon l'une quelconque des revendications précédentes,
**caractérisé en ce qu'**
on peut introduire la plaquette de circuits imprimés (14) essentiellement rectangulaire dans une ouverture (50) du boîtier d'engrenage (10).

16. Moteur électrique selon l'une quelconque des revendications précédentes,
**caractérisé en ce que**
la plaquette de circuits imprimés (14) est reliée au connecteur (28).

17. Moteur électrique selon la revendication 16,
**caractérisé en ce qu'**
un bridage (52) relie le connecteur (28) au boîtier d'engrenage (10).
